# EUROPEAN PATENT SPECIFICATION

(11) **EP 3 259 185 B1**
(45) Date of publication and mention of the grant of the patent: **01.05.2019**
(21) Application number: 16713625.8
(22) Date of filing: 18.02.2016
(51) Int. Cl.: B64C 39/02

(54) **INVERTED DRONE**
HÄNGENDE DROHNE
DRONE INVERSÉ

(30) Priority: 18.02.2015 NL 2014310
(43) Date of publication of application: 27.12.2017
(73) Proprietor: Monkeywings IP B.V., 2013 DS Haarlem (NL)
(72) Inventor: VAN DEN HEUVEL, Hans Adriaan, 2031 TC Haarlem (NL)
(74) Representative: Vogels, Leonard Johan Paul
(86) International application number: PCT/NL2016/050115
(87) International publication number: WO 2016/133391

(56) References cited:
- US-A1- 2009 294 584
- US-A1- 2014 138 477

## Description

### FIELD OF THE INVENTION

The present invention is in the field of a rotorcraft in which lift and thrust can be supplied by rotors, and specifically relates to a drone. The drone comprises a camera which is used for making optical and/or sound recordings, especially during (live) events, such as concerts, gatherings, dance events, etc. The camera gives an impression of the events and is capable of recording specific details thereof, such as individual people.

### BACKGROUND OF THE INVENTION

The present invention is in the field of a rotorcraft which is used for making recordings. A rotorcraft, such as a helicopter and a drone, is a vehicle wherein lift and thrust are supplied by rotors. This allows the aircraft to take off and land vertically, to hover, and to fly forward, backward, and laterally. A drone, which is an example of an Unmanned Aerial System (UAS), is a specific type of rotorcraft, typically having more than one rotor. Other generic references for a drone are an unmanned aerial vehicle (UAV), an unpiloted aerial vehicle and a remotely piloted aircraft (RPA). The present drone is relatively small and relates more to a model aircraft.

The rotor generates thrust. A rotor system may be mounted in various ways, such as horizontally for providing vertical lift, and vertically for providing horizontal thrust to counteract torque from the main rotors. The rotor typically consists of a mast, a hub and 2-6 rotor blades. In any case a rotorcraft needs an anti-torque means, which may be provided by a second, counter-turning, rotor.

For now the regulations with respect to drones are partly in a legal grey area. Authorities have issued formal regulations and guidelines surrounding drones in the private sector, but still being somewhat limited in scope. Clearly there is a need for commercial photography, videography, and surveillance purposes, but it is not clear what is allowed and what not, and further which safety regulations apply.

In view of safety issues various uses of drones are often forbidden, or at least limited. A risk for crowded events is for instance that one or more rotors of the drone may fail and the drone will crash into the crowd as a consequence. Also drones are relatively noisy, due to the rotors and engines, the rotors amplifying the experienced noise level by the downward air flow.

The music, dance and television industry tends to record every single one of their events. Currently at indoor events, the recordings are made using spider cameras (camera hanging with the help of at least 6 heavy cables) or using crane cameras (camera on a movable crane). Both methods are very costly in terms of money and space.

Some prior art documents recite aircrafts. For example US 2014/138477 A1 recites a rotorcraft including a fuselage, one or more motor-driven rotors for vertical flight, and a control system. The motors drive the one or more rotors in either of two directions of rotation to provide for flight in either an upright or an inverted orientation. An orientation sensor is used to control the primary direction of thrust, and operational instructions and gathered information are automatically adapted based on the orientation of the fuselage with respect to gravity. The rotors are configured with blades that invert to conform to the direction of rotation.

US 2009/294584 A1 recites a stabilized unmanned aerial vehicle (UAV) recovery system is disclosed. In the illustrative embodiment for UAV recovery over water, the system includes ship-based elements and UAV-based elements. The ship-based elements include a robot arm that holds a capture mechanism over the side of the ship while compensating for wave-induced ship motion. The UAV-based elements include a hook mounted to the top of the UAV fuselage. With the capture mechanism held stable from the perspective of a UAV approaching from behind or in front of the mechanism, the UAV is flown under it, snagging an arresting line with the hook. With continued forward motion of the UAV, the arresting line pulls out of a winch drum that is coupled to a brake, bringing the UAV to rest.

The present invention therefore relates to an improved drone for making recordings, which solves one or more of the above problems and drawbacks of the prior art, providing reliable results, without jeopardizing functionality and advantages.

### SUMMARY OF THE INVENTION

The present invention relates to an inverted drone according to claim 1, and a use of said drone according to claim 11. The drone is very safe in use especially in circumstances wherein vulnerable elements and people are present, has minimal movement restrictions, can move independently in a typically pre-defined space. The present drone provides a lightweight system (1-50 kg, typically 2-20 kg), freedom of movement, no interference between the rotors and the retention means, a redundancy fail safe system, and a seamless flight ability. For the purpose of the present invention the inverted drone may be considered as an aerodynamically assisted camera system.

The present drone comprises at least one rotor, typically two or more rotors, such as four or more rotors. In an example the present system comprises 6 rotors. The rotors are preferably provided in a symmetrical layout, e.g. for one rotor the one rotor is in a central position, for two rotors the rotors are each opposite of a central position at an equal distance, etc. The rotors are preferably provided with a mesh or the like, preventing contact with the rotors themselves. In addition the present rotors are preferably tiltable in order to have full control of the present device, e.g. in terms of yaw, pitch and roll. For full control typically also a control unit having a gyroscope, driver supplies, and so on, is provided. The control unit regulates power supply to the rotors.

The present drone comprises at least one optical camera, and preferably also at least one audio receiving unit, such as a microphone, for making high quality, sophisticated, spectacular, and dynamical recordings. The at least one optical camera is preferably at least one 3D-camera, thereby providing the opportunity to make 3D recordings. As the drone is typically "airborne" over an event, the camera is typically directed at least partly downwards, in order to view the event. The at least one camera can preferably be rotated along at least one axis, preferably along at least two axis, for providing various views of the event. The camera may also be a large angle camera, or a 360° camera. The camera preferably comprises a high resolution and a high sensitive charge coupled device (CCD) camera. Also combinations of the above are foreseen. The camera can be directed by a control unit, can perform a pre-determined program, controlled live by a human operator, etc. The camera may be in wireless or wired contact with at least one of a receiving unit, a processing unit, a control unit, etc. For the audio receiving unit similar considerations and embodiments as for the camera are foreseen; as an extra option the audio unit may be a small angle directional unit, e.g. comprising a concave disk for reflecting sound towards a focus of the disk.

The drone itself may comprise a control unit, or a control unit may be provided at a different location connected wired or wireless to the present drone. The control unit is amongst others capable of directing a drone towards a certain location, changing altitude of the drone, changing speed of the drone, starting and stopping the drone including the rotors, moving the drone around, e.g. in a trajectory, etc. The control unit may be in the form of an algorithm, a computer program, a touch screen, virtual reality glasses, a joy-stick, and combinations thereof.

The present drone is characterized in a retention means for limiting downward movement of the drone thereby securing the drone and preventing that the drone might fall down. The retention means prevents the drone from crashing into e.g. a crowd. It also prevents the drone from coming too close to e.g. a crowd, in terms of vertical distance, by limiting its lower altitude to a minimum, the minimum typically being at least 4 meters, preferably at least 5-10 meters. Typically a minimum distance to the crowd of 2 meters is applied.

The present drone is further characterized in that the at least one rotor provides a downward force. Hence, instead of the typical configuration used, wherein a rotor provides upward lift, for making a rotorcraft airborne, the rotor provides a downward force. The downward force can be controlled, from a minimum level to a maximum level. When a maximum level of the force is used the drone is typically in its highest state of downward acceleration. The downward force of the at least one rotor is partly or fully compensated by the retention means. If the downward force is fully compensated the drone remains at the same (constant) altitude. The downward force can e.g. be established be reverting the rotors with respect to a more standard configuration typically used in the prior art. Therewith a risk of a crash or the like is minimized, and the drone provides significantly less noise and turbulence experienced compared to a similar drone having an upward force (lift). The noise reduction, as measured at 2 meter height, is in the order of -5--20 dB, whereas turbulence is virtually absent; such can be attributed to the retention means that compensate for 105-130% of the gravitational force of the present drone, such as 110%. The downward thrust provided by the at least one rotor can be limited to about 5-20% of the gravitational force on the drone, typically to less than 10%. So compared to a prior art drone with a same gravitational force only a fraction of the power is supplied to the rotors (e.g. 10%). In addition effectively thrust of the at least one rotor is mainly used for attitude control (pitch, yaw and roll) and at the best partly for (negative) lift, hence downward forced movement. On top of that, when the present drone is in its lowest position, i.e. closest to a crowd, also the lowest amount of power for the at least one rotor is required, resulting in a status wherein a lowest amount of noise produced.

Thereby the present invention provides a solution to one or more of the above mentioned problems and drawbacks, without jeopardizing beneficial effects.

Advantages of the present description are detailed throughout the description.

### DETAILED DESCRIPTION OF THE INVENTION

The present invention relates in a first aspect to a drone according to claim 1.

In an exemplary embodiment of the present drone the retention means comprises at least one line, preferably a retractable line. In a preferred embodiment two or three lines are used. Each line is typically attached to an electromotor for retracting and relieving the line. The motors and lines are cooperating with one and another; in a way one could consider the multiple lines as one line. In order to prevent wear and to prolong a lifetime of the electromotor preferably a clutch is provided per motor. It is noted that elongation of the line itself is typically limited to a total of a few centimetres at the most over a typical length of 5-50 m. The flexibility allows the drone to mover relatively freely. The line, and likewise retention means, is preferably as light as possible. On the other hand, in view of safety, the retention means is as strong as possible; from a practical point of view the system should be capable of carrying its own weight, that of the drone, and compensating the downward force of the drone. In view of safety the strength is based on a multitude of said combined forces and weights. Typically it should be capable of withstanding a force of 1000 N, which is for most cases over-dimensioned as a typical mass is 10-500 N, more often 50-200 N. The retention means may make use of reinforced lines. Also lightweight high strength polymers and the like may be used, such as Dyneema®.

The line may further be provided with a controller, such as an electrical controller. The controller may e.g. actively control and regulate an upward force of the line exerted on the drone. It is noted that attaching a line to the UAS turned out to be very tricky in terms of ensuring that the line did not get entangled in the rotors.

In an exemplary embodiment of the present drone the retention means continuously provides an upward force. The constantly provided force may be caused by a spring attached to a line, which line is attached to the drone, such as the above line. The spring preferably is a circular or elliptical spring, such as a clock spring. The spring may be in a housing, the housing having an opening and a reel for receiving the line. Such also provides a mechanism for automatically winding and unwinding a line, making the drone safer in use by reducing a chance of an accident. Alternative systems having a similar functionality may also be used.

In an exemplary embodiment the present drone comprises a spatial position specifier. By knowing a spatial position of the drone one can move the drone from that position, e.g. towards a position of interest. The position of interest can be identified using e.g. a remote position control system, which control system is in wired or wireless contact with the drone. Likewise the position of the drone can be manipulated through optical means, such as by virtual reality glasses, which optical means reflect an area of interest from a controlling human being, such as by means of to the controller coupled viewing information. Likewise also a DJ may control the drone, such as by hand movement. As such the drone may form part of an event.

In an exemplary embodiment the present drone comprises a gimbal to which the camera is connected, preferably allowing rotation over multiple axes. The gimbal preferably is a so-called Cardan suspension.

In an exemplary embodiment of the present drone the retention means provide a force that increases from a top most position of the drone to a lowest position of the drone. The above spring is an example thereof.

In an exemplary embodiment the present drone further comprises a means for providing energy, such as an electrical line. The electrical line may be combined with the retention means. Also a battery or the like may be provided.

In an exemplary embodiment of the present drone the force of one or more of the at least one rotor is adaptable. Preferably the total force in a given direction is adaptable, preferably by a control unit. Thereby the drone can be moved around at a selected speed, altitude, trajectory, direction, etc.

In an exemplary embodiment of the present drone a length of the retention means is adaptable. Such can e.g. be established by the above housing and reel. It is preferred to have a variable length of the retention means in order to provide almost free movement of the drone, apart from the given boundary and safety conditions typically being present.

In an exemplary embodiment of the present drone the retention means further comprise an acceleration limiter. The limiter prevents the drone from moving unexpectedly or unwantedly in a certain direction, and in particular in a direction of a crowd or people. The limiter may be in the form of a safety belt, preventing acceleration above a certain threshold level. As such the safety is further improved. The limiter may obtain information on acceleration from a gyroscope, an accelerometer, or the like.

In an exemplary embodiment the drone comprises a removable casing or the like, which casing can be adapted in view of an event where the present drone might be used.

In an exemplary embodiment the present drone comprises an attachment means for attaching the retention means, wherein the attachment means comprises a spherical section, a hook on top of the spherical section for attaching the retention means, a circular structure for maintain the spherical section in place, and a hollow inner section. It has been found that such an attachment means is very secure and safe and practically never fails in its function. The attachment means is therefore preferably welded to the drone. The attachment is found to be very durable.

In an exemplary embodiment of the present drone the at least one rotor comprises an inner section and an outer section. The inner section and outer section may be fully or partially separated, such as by a wall, a membrane, a partial wall, a mesh, etc. The inner section has a relative area of 1-50% of the total area (area inner section plus area outer section), preferably 2-35%, such as 4-25%. The at least one rotor further comprises a first means for generating air flow in the inner section, as well as a second means for generating air flow in the outer section. The first and second air flow means may be combined into one integrated means. In an example the first means is an inner rotor, and the second means is an outer rotor. The first means for generating air flow in the inner section provide a 2-10 times lower air flow (e.g. based on a power of 0.1-10 Nm/s) than the second means for providing air flow in the outer section (e.g. based on a power of 0.2-100 Nm/s). As such the rotor is operated more efficient (such as 20-500% more efficient, typically 5-100% more efficient, such as 10-50% more efficient) and it produces less noise (-3--30 dB). As a consequence a smaller rotor, and a hence a smaller drone can be used.

In a second aspect the present invention relates to a use of the present drone according to claim 11. Therein the drone is attached to an overhanging structure, such as a roof, interconnecting wires, a mechanical structure, one or more mounting cables, and a crane. As such the drone can move relatively freely over an area underneath, such as over an event.

In an exemplary embodiment the present use is indoors, or outdoors. As such events taking place at a given location can be covered. For outdoor situations a crane may be preferred, whereas for indoor situation mechanical structures may be preferred.

In an exemplary embodiment the present use is for making recordings of a concert, an event, a light show, for providing light, etc.

In an exemplary embodiment of the present use the retention means are moveably attached to the overhanging structure, or wherein the drone including the retention means is moveably attached to the overhanging structure, or wherein the drone including the retention means is attached to a moveable overhanging structure, or combinations thereof. Therewith in a given situation the drone can make recordings without being limited too much by the overhanging structure.

The one or more of the above examples and embodiments may be combined, falling within the scope of the invention.

The invention is further detailed by the accompanying figures, which are exemplary and explanatory of nature and are not limiting the scope of the invention. To the person skilled in the art it may be clear that many variants, being obvious or not, may be conceivable falling within the scope of protection, defined by the present claims.

### FIGURES

The invention although described in detailed explanatory context may be best understood in conjunction with the accompanying figures. In the figures:
- 100: Drone (UAS)
- 10: Retention means
- 11: friction plates
- 15: Optical camera
- 20: Inversed propeller
- 26: rotation of propeller
- 27: downward thrust
- 30: Cable
- 36: tension in cable
- 40: Pulley for (un)winding the cable
- 41: cable retraction system
- 45: Seat belt component
- 47: Connection shaft
- 50: Electrical Engine
- 60: Amp regulator
- 61: AC current
- 70: Suspension
- 71: Suspensions ring
- 75: rail structure
- 76: attachment to surrounding environment
- 81: Central rotor
- 82: Peripheral rotor
- 84: Inner section
- 85: Outer section
- 90: Stage
- 91: Sound control booth

Fig. 1 shows a suspended drone.
Fig. 2 shows an attachment means.
Fig. 3 shows details of the present drone.
Fig. 4 shows an advanced rotor set-up.
Figs. 5a-b, left (side view) and right (top view) show suspended drones.
Fig. 6 shows an artist impression of the present drone.
Fig. 7 shows a suspended drone.
Fig. 8 shows details of the present cable retraction system.

### DETAILED DESCRIPTION OF THE FIGURES

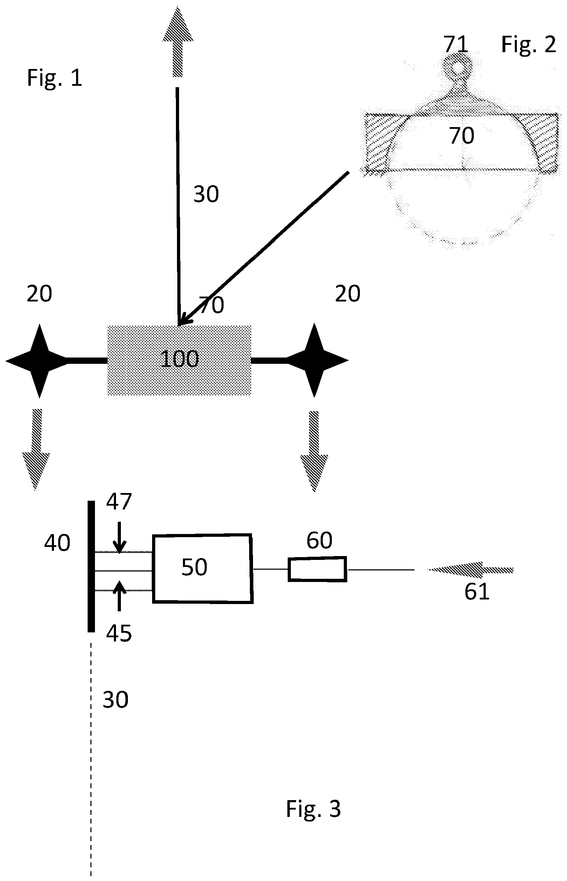

Fig. 1 shows a suspended drone. The drone 100 is attached to a cable 30, by suspension means 70. The rotors 20 provide a downward force, indicated by arrows, whereas the cable provides an upward force, indicated by a single arrow. The drone comprises an optical camera 15 (not shown), typically at a lower side thereof.

Fig. 2 shows a suspension means 70 for the drone. The suspension means is incorporated in the drone, typically by welding. On a top side a ring 71 is provided for attaching the cable 30. A preferred attachment is a pinball attachment, which consists of a ball embedded in a three quarter hollow ball, as shown in the drawing below. The inner ball has a hook welded to it, into which the cable can be attached.

Fig. 3 shows details of the present drone. The drone (not visible) is attached to cable 30. The cable is attached to a retention means or system. The present retention means (RS) may comprise more components than just an electrical engine 50. The force generated by an electrical engine may be adaptable. This will ensure agility in accordance with the environment. The length of the cable may differ from one venue to another, hence creating different weights from the cable. Moreover, over time, the friction of the components in the RS will vary. An adaptable force from the engine ensures proper use of the fail safe system (FSS) throughout its lifetime. To achieve this variable, an amp regulator 60 is preferred, being provided with an AC current 61. The amp regulator adjusts the intensity of power delivered to the engine, hence giving a variable force generated by the electrical engine. However, as little the chance may be, failure of the amp regulator may occur during flight. To prevent disastrous outcome, in addition a seat belt concept 45 may be applied. The blades on the UAS are oriented inversely compared to a more common setup, pushing the UAS downwards. If failure occurs in the amp regulator, the UAS could plummet to the ground. In a similar manner a seatbelt works, if the acceleration is greater than a set value, the "seatbelt" component will immediately block the descent of the UAS. Further a shaft 47 for connecting the electrical engine to the pulley is provided. The pulley 40 comprises an unwinded part of the cable, and typically a spring like element, for automatically winding the cable.

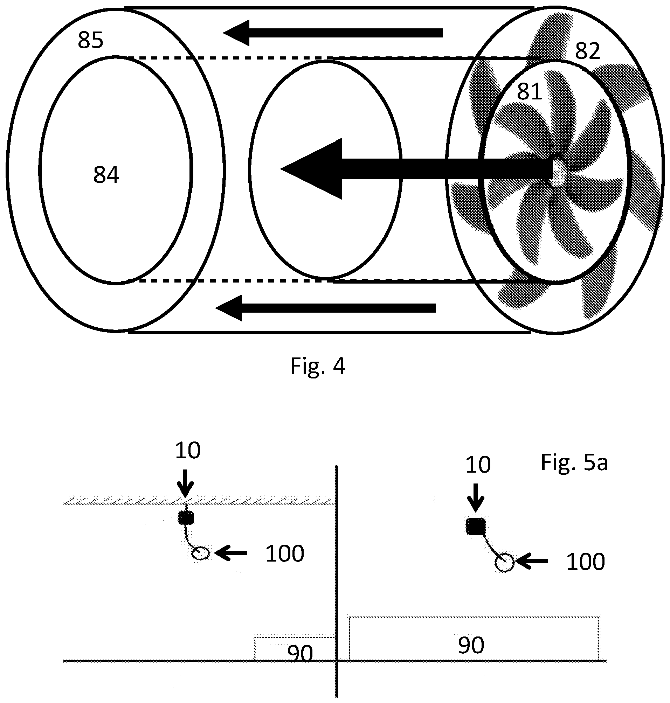

Fig. 4 shows an advanced rotor set-up. A further research is performed for improving conventional propellers or in other words, replace the propellers by a potentially more efficient, less noisy, lighter, and less turbulent propeller system. Fig. 4 is a representation of the airstream of the improved turbofan. Above and below is the air pushed by a bypass (outer section 85) and in in the middle (inner section 84) is the air pushed by the core. The width of the areas (the height) are meant to be proportional to the flow and the length (from side to side) is proportional to the velocity of the airstream. The propellers are improved in terms of velocity of the air stream and an amount of air displaced. Fig. 4 is a schematic drawing of the present propeller system. Therein a central rotor 81 and a peripheral rotor 82 are provided. Notice that the core and the bypass air flows and velocities are inverse from a conventional system: the bypass air velocity is larger than the core air velocity, and as a consequence the amount of air having a large velocity compared to the amount of air having a low velocity is increase, by 20-500%.

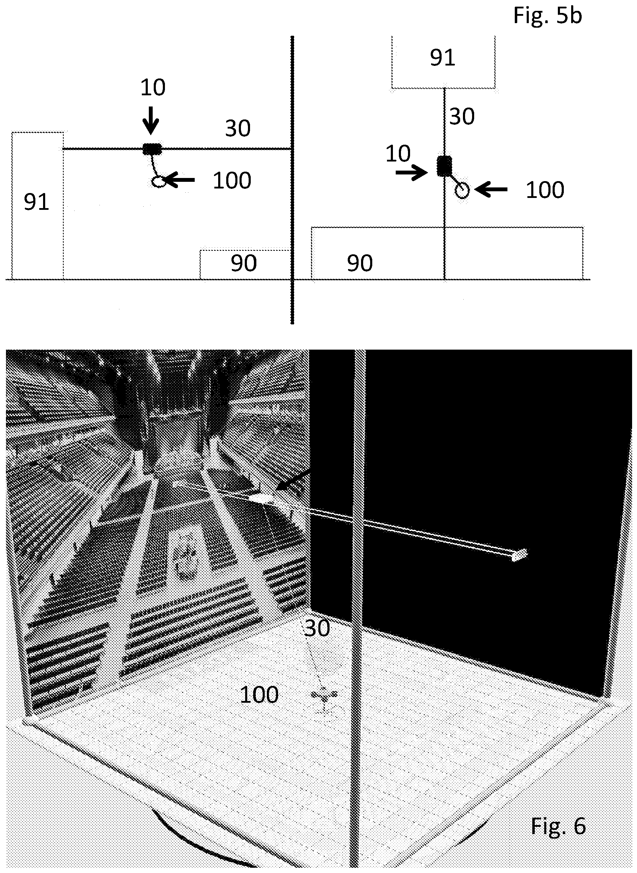

Figs. 5a-b, left (side view) and right (top view) show suspended drones. The whole FSS, including drone 100, cable 30, and retention means 10, may need to be attached in the venues. There are various possibilities: one (fig. 5a, left is a side view, right is a top view) which consists of a cable attached from above the stage 90 to the sound control pod 91, with the RS 10 mounted upon that cable and capable of moving along using the thrust of the UAS; a second (fig. 5b, left is a side view, right is a top view) which consists of a centralised hooked RS 10. For ease of understanding, the first type of attachment will be referred to as "cable mounting" and the latter as "central mounting". The top and side view drawings picturing these two possibilities are shown. Do note that for the second attachment method, the drawings show an attachment to the ceiling, but for outdoor venues a crane can easily be used instead of the roof.

Fig. 6 shows an artist impression of the present drone. Therein a drone 100 is visible, connected to a cable 30. The cable 30 is connected to a retention means 10. The whole system is connected to a rail system 75, which may be attached to the ceiling and/or to the walls.

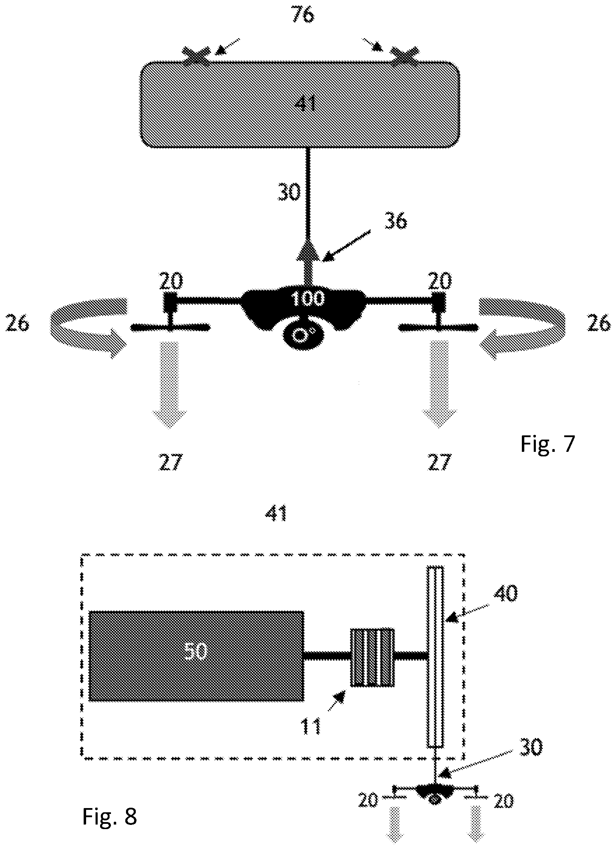

Fig. 7 shows a suspended drone. Therein an attachment 76 to a surrounding environment is shown. Further a cable retraction system 41, attached to the surrounding environment is present. A cable 30 between the drone and cable retraction system is shown. Due to gravitational forces and thrust of the drone typically tension 36 in the cable 30 is present. The rotors 20 of the drone 100 provide downward thrust 27. The rotors rotate 26.

Fig. 8 shows details of the present cable retraction system 41, which is an example of the retention means. Therein an electrical motor 50, friction plates 11 and a cable spool 40 is provided. From the cable spool a cable 30 is attached to the present drone, having rotors 20 which provide downward thrust.

The figures have been further detailed throughout the description.

## Claims

1. Inverted drone (100) comprising
at least one rotor (20) for providing a downward force,
at least one optical camera (15),
**characterized in that** the drone further comprises a retention means (10) for limiting downward movement of the drone.

2. The drone according to claim 1, wherein the retention means comprises at least one line (30).

3. The drone according to any of claims 1-2, wherein the retention means continuously provides an upward force.

4. The drone according to any of claims 1-3, comprising a spatial position specifier.

5. The drone according to any of claims 1-4, wherein the at least one rotor comprises an inner section (84) and an outer section (85), a first means (81) for generating air flow in the inner section, and a second means (82) for generating air flow in the outer section.

6. The drone according to any of claims 1-5, wherein the force of one or more of the at least one rotor is adaptable.

7. The drone according to any of claims 1-6, wherein a length of the retention means is adaptable.

8. The drone according to any of claims 1-7, wherein the retention means further comprise an acceleration limiter (45) .

9. The drone according to any of claims 1-8, comprising an attachment means (70) for attaching the retention means, wherein the attachment means comprises a spherical section, a hook (71) on top of the spherical section for attaching the retention means, a circular structure for maintaining the spherical section in place, and a hollow inner section.

10. The drone according to any of claims 1-9, wherein the at least one rotor is tiltable.

11. Use of a drone of any of claims 1-10 in moving the drone freely over an area underneath, wherein the drone is connected to an overhanging structure.

12. Use according to claim 11, wherein the use is indoors, or outdoors.

13. Use according to claim 11 or 12, wherein the use is for making recordings of a concert, for providing crowd entertainment, or an event.

14. Use according to any of claims 11-13, wherein the retention means are moveably attached to the overhanging structure, or wherein the drone including the retention means is moveably attached to the overhanging structure, or wherein the drone including the retention means is attached to a moveable overhanging structure, or combinations thereof.

## Patentansprüche

1. Umgekehrte Drohne (100) umfassend
mindestens einen Rotor (20) zum Bereitstellen einer nach unten gerichteten Kraft,
mindestens eine optische Kamera (15),
**dadurch gekennzeichnet, dass** die Drohne ferner eine Rückhalteeinrichtung (10) zum Begrenzen der Abwärtsbewegung der Drohne umfasst.

2. Drohne nach Anspruch 1, wobei die Rückhaltemittel mindestens eine Leitung (30) umfassen.

3. Drohne nach einem der Ansprüche 1 bis 2, wobei die Rückhalteeinrichtung kontinuierlich eine nach oben gerichtete Kraft bereitstellt.

4. Drohne nach einem der Ansprüche 1 bis 3, die einen räumlichen Positionsbezeichner aufweist.

5. Drohne nach einem der Ansprüche 1 bis 4, wobei der mindestens eine Rotor einen inneren Abschnitt (84) und einen äußeren Abschnitt (85) aufweist, wobei eine erste Einrichtung (81) zum Erzeugen einer Luftströmung in dem inneren Abschnitt vorgesehen ist, und eine zweite Einrichtung (82) zum Erzeugen einer Luftströmung in dem äußeren Abschnitt.

6. Drohne nach einem der Ansprüche 1-5, wobei die Kraft von einem oder mehreren der mindestens einen Rotor anpassbar ist.

7. Drohne nach einem der Ansprüche 1 bis 6, wobei eine Länge der Rückhalteeinrichtung anpassbar ist.

8. Drohne nach einem der Ansprüche 1-7, wobei die Rückhaltemittel ferner eine Beschleunigungsbegrenzungseinrichtung (45) umfasst.

9. Drohne nach einem der Ansprüche 1 bis 8, umfassend ein Befestigungsmittel (70) zum Befestigen der Rückhalteeinrichtung, wobei das Befestigungsmittel einen kugelförmigen Abschnitt, einen Haken (71) auf der Oberseite des kugelförmigen Abschnitts aufweist zum Befestigen der Rückhalteeinrichtung, einer kreisförmigen Struktur um den kugelförmigen Abschnitt in Stelle zu halten, und eines hohlen inneren Abschnitts.

10. Drohne nach einem der Ansprüche 1-9, wobei der mindestens eine Rotor kippbar ist.

11. Verwendung einer Drohne nach einem der Ansprüche 1-10 zum freies Bewegen der Drohne über einen darunter liegenden Bereich, wobei die Drohne mit einer überhängenden Struktur verbunden ist.

12. Verwendung nach Anspruch 11, wobei die Verwendung drinnen oder draußen ist.

13. Verwendung nach Anspruch 11 oder 12, wobei die Verwendung zum Erstellen von Aufnahmen eines Konzerts, zum Bereitstellen von Crowd-Unterhaltung, oder eines Ereignisses ist.

14. Verwendung nach einem der Ansprüche 11 bis 13, wobei die Rückhaltemittel beweglich an der überhängenden Struktur befestigt sind, oder wobei die Drohne mit den Rückhaltemitteln bewegbar an der überhängenden Struktur angebracht ist, oder wobei die Drohne mit den Rückhaltemitteln befestigt ist zu einer beweglichen überhängenden Struktur, oder Kombinationen davon.

## Revendications

1. Drone inversé (100) comprenant
au moins un rotor (20) pour fournir une force vers le bas,
au moins une caméra optique (15),
**caractérisé en ce que** le drone comprend en outre un moyen de retenue (10) destiné à limiter le mouvement descendant du drone.

2. Drone selon la revendication 1, dans lequel le moyen de retenue comprend au moins une ligne (30).

3. Drone selon l'une quelconque des revendications 1 et 2, dans lequel le moyen de retenue fournit continuellement une force ascendante.

4. Drone selon l'une quelconque des revendications 1 à 3, comprenant un spécificateur de position spatiale.

5. Drone selon l'une quelconque des revendications 1 à 4, dans lequel le au moins un rotor comprend une section interne (84) et une section externe (85), un premier moyen (81) pour générer un flux d'air dans la section interne, et un second moyen (82) pour générer un flux d'air dans la section extérieure.

6. Drone selon l'une quelconque des revendications 1 à 5, dans lequel la force d'un ou plusieurs des au moins un rotor est adaptable.

7. Drone selon l'une quelconque des revendications 1 à 6, dans lequel une longueur du moyen de retenue est adaptable.

8. Drone selon l'une quelconque des revendications 1 à 7, dans lequel les moyens de retenue comprennent en outre un limiteur d'accélération (45).

9. Drone selon l'une quelconque des revendications 1 à 8, comprenant un moyen de fixation (70) pour fixer le moyen de retenue, dans lequel le moyen de fixation comprend une section sphérique, un crochet (71) sur la section sphérique pour fixer les moyens de rétention, une structure circulaire pour maintenir la section sphérique en place, et une section interne creuse.

10. Drone selon l'une quelconque des revendications 1 à 9, dans lequel le au moins un rotor est inclinable.

11. Utilisation d'un drone selon l'une quelconque des revendications 1 à 10 pour déplacer le drone librement sur une zone en dessous, dans laquelle le drone est relié à une structure en surplomb.

12. Utilisation selon la revendication 11, dans laquelle l'utilisation est à l'intérieur, ou à l'extérieur.

13. Utilisation selon la revendication 11 ou 12, dans laquelle l'utilisation est faite pour réaliser des enregistrements d'un concert, pour fournir un divertissement de foule, ou un événement.

14. Utilisation selon l'une quelconque des revendications 11 à 13, dans laquelle les moyens de retenue sont attachés de manière mobile à la structure en surplomb, ou dans lequel le drone comprenant les moyens de retenue est attaché de manière mobile à la structure en surplomb, ou dans lequel le drone comprenant le moyen de retenue est attaché à une structure débordante mobile, ou des combinaisons de ceux-ci.
